# EUROPEAN PATENT APPLICATION

(11) **EP 4 641 396 A1**
(43) Date of publication of application: **29.10.2025**
(21) Application number: 23919350.1
(22) Date of filing: 28.09.2023
(51) Int. Cl.: G06F 12/0882, G06F 12/1009, G06F 12/02

(54) **METHOD AND APPARATUS FOR ACCESSING MEMORY**

(30) Priority: 01.02.2023 CN 202310120599
(71) Applicant: Huawei Technologies Co., Ltd., Shenzhen, Guangdong 518129 (CN)
(72) Inventor: ZHENG, Wenjun, Shenzhen, Guangdong 518129 (CN); GAO, Jianbo, Shenzhen, Guangdong 518129 (CN); ZHU, Caixi, Shenzhen, Guangdong 518129 (CN)
(74) Representative: Huawei European IPR
(86) International application number: PCT/CN2023/122599
(87) International publication number: WO 2024/159786

(57) **Abstract**

This application provides a method for accessing a memory, including: creating a first page table for a first process, where the first page table is used to implement translation from a virtual address of the first process to a physical address when the first process accesses the memory, a first page table entry in the first page table includes information indicating a first virtual address range, and the first virtual address range corresponds to a first virtual memory space. A page table entry that can indicate a flexible address range is designed, so that a system can better manage a page table based on actual memory distribution.

## Description

This application claims priority to Chinese Patent Application No. 202310120599.1, filed with the China National Intellectual Property Administration on February 1, 2023, and entitled "METHOD AND APPARATUS FOR ACCESSING MEMORY", which is incorporated herein by reference in its entirety.

### TECHNICAL FIELD

This application relates to the field of computers, and more specifically, to a method and an apparatus for accessing a memory.

### BACKGROUND

A memory of a computer system is usually managed in a form of physical pages, and a size of one physical page is usually 4 K. When allocating a physical page to a process, the computer system records allocation information of the corresponding physical page in a page table of the process in a form of a page table entry, where the page table entry is row information in the page table. In this way, when a process needs to access a physical page, a page table corresponding to the process may be walked to find a corresponding page table entry, to access the corresponding physical page. Because overheads of the page table walk are high, the computer system first queries a translation lookaside buffer (translation lookaside buffer, TLB). The TLB buffers page table entries recently accessed. If the corresponding page table entry is not found in the TLB, the computer system further walks the page table corresponding to the process.

A page table management mechanism for a current ARM architecture includes a page table supporting a block (block)-granularity virtual address space (for example, 2 MB or 1 GB) (referred to as a large page) and a page table supporting a page (page)-granularity virtual address space (for example, 4 KB) (referred to as a normal page or a small page). However, a gap between a block-granularity memory space and a page-granularity memory space is large, resulting in low large page usage. Due to the low large page usage, page tables of a plurality of contiguous small pages that form a large page occupy a large amount of memory space. Therefore, how to improve efficiency of the page table management mechanism becomes a problem to be urgently resolved.

### SUMMARY

This application provides a method and an apparatus for accessing a memory. A page table entry that can indicate a flexible address range is designed, so that a system can better manage a page table based on actual memory distribution.

According to a first aspect, a method for accessing a memory is provided, and is applied to a processor core in which a first process runs. The method may be performed by the processor core, or may be performed by a circuit configured in the processor core. This is not limited in this application. For convenience, an example in which the method is performed by the processor core is used below for description.

The method for accessing a memory includes: creating a first page table for the first process, where the first page table is used to implement translation from a virtual address of the first process to a physical address when the first process accesses the memory, the first page table is an m-level page table, and m is a positive integer, where
a first page table entry in the first page table includes information indicating a first virtual address range, and the first virtual address range corresponds to a first virtual memory space.

Based on the foregoing technical solution, a page table allocated to a process (for example, the first process) includes a page table entry that can indicate a virtual address range, and a virtual memory space corresponding to the virtual address range is equal to a physical memory allocated to the process in terms of size. Therefore, a physical memory of a flexible size may be allocated to a process based on the foregoing technical solution. The physical memory may be obtained through mapping by designing a page table entry indicating a virtual address range, so that a system can better manage a page table based on an actual memory distribution situation.

For example, in an ARM architecture, a physical memory of an appropriate size may be allocated to a process, and a size of the physical memory may be a size other than 4 KB, 2 MB, and 1 GB. In order that the physical memory can be accessed by using a page table when the process accesses the memory, a page table entry indicating a virtual memory space and a size of the physical memory allocated to the process is designed.

With reference to the first aspect, in some implementations of the first aspect, the method further includes: storing the first page table.

According to a second aspect, a method for accessing a memory is provided, and is applied to a memory management unit.

The method for accessing a memory includes: receiving an access request for a memory, where the access request includes a first virtual address of a first process; and reading, based on configuration information and the first virtual address, a page table entry from a first page table corresponding to the first process, where the configuration information indicates that at least one page table entry in the first page table has a function of indicating a virtual address range, where a first page table entry in the first page table includes information indicating a first virtual address range, and the first virtual address range corresponds to a first virtual memory space.

Based on the foregoing technical solution, after obtaining the first virtual address, the memory management unit reads the page table entry based on the first virtual address and the configuration information. The configuration information indicates that a page table corresponding to a process includes a page table entry having the function of indicating the virtual address range. In other words, in the foregoing technical solution, the memory management unit may learn, based on the configuration information, that a to-be-obtained page table entry may have the function of indicating the virtual address range, and the function of indicating the virtual address range of the page table entry needs to be considered when the page table entry is obtained. In addition, a page table allocated to a process (for example, the first process) includes a page table entry that can indicate a virtual address range, and a virtual memory space corresponding to the virtual address range is equal to a size of a physical memory allocated to the process. Therefore, a physical memory of a flexible size may be allocated to a process based on the foregoing technical solution. The physical memory may be obtained through mapping by designing a page table entry indicating a virtual address range, so that a system can better manage a page table based on an actual memory distribution situation.

With reference to the second aspect, in some implementations of the second aspect, reading, based on the configuration information, the page table entry from the first page table includes: reading, at a granularity (or a unit) of a quantity of bytes occupied by the first page table entry, the page table entry from the first page table.

Based on the foregoing technical solution, in a procedure of obtaining a page table entry, the memory management unit obtains the page table entry based on a size of the page table entry having the function of indicating the virtual address range, to avoid a case in which the page table entry having the function of indicating the virtual address range cannot be successfully obtained, and improve efficiency of reading the page table entry by the memory management unit. This reduces resources consumed by the memory management unit to perform a read operation.

With reference to the second aspect, in some implementations of the second aspect, the method further includes: determining that the first virtual address belongs to the first virtual address range; and determining, based on page offset information and most significant bit offset information that are included in the first page table entry, a first physical address corresponding to the first virtual address, where the page offset information indicates an offset between a physical start address of a first physical memory and a start physical address of a first physical page, and the most significant bit offset information indicates the start physical address of the first physical page. The first physical page is a physical page including the first physical memory, and a memory size of the first physical page is a physical memory size indicated by the first page table entry.

Based on the foregoing technical solution, if the first virtual address is in the address range indicated by the first page table entry, the memory management unit may determine, based on a parameter in the first page table entry, the first physical address corresponding to the first virtual address, to complete address translation. This improves address translation efficiency.

With reference to the first aspect or the second aspect, in some implementations of the first aspect or the second aspect, a size of the first virtual memory space is equal to a size of the first physical memory allocated to the first process.

With reference to the first aspect or the second aspect, in some implementations of the first aspect or the second aspect, the size of the first physical memory is determined based on a size of a contiguous free physical memory and a requirement of the first process for a physical memory.

Based on the foregoing technical solution, the size of the first physical memory occupied by the first process is determined based on the size of the contiguous free physical memory and the requirement of the first process for a physical memory, so that the first process can preferentially select a contiguous free physical memory of an appropriate size.

With reference to the first aspect or the second aspect, in some implementations of the first aspect or the second aspect, the information indicating the first virtual address range includes: first indication information and second indication information, where the first indication information indicates a start address of the first virtual address range, and the second indication information indicates an end address of the first virtual address range; the first indication information and third indication information, where the third indication information indicates a span of the first virtual address range; or the second indication information and the third indication information.

Based on the foregoing technical solution, the virtual address range may be indicated in different manners. This improves flexibility of the solution. In addition, the foregoing information indicating the virtual address range is included in the page table entry, so that after obtaining the page table entry, the memory management unit can quickly determine the indicated virtual address range based on the information included in the page table entry. This increases an address translation speed.

With reference to the first aspect or the second aspect, in some implementations of the first aspect or the second aspect, when the first page table includes an n^{th}-level page table and an (n+1)^{th} level page table, and when the first page table entry is a page table entry in the n^{th}-level page table, the first page table entry further includes information indicating a base address of the (n+1)^{th}-level page table, where n is a positive integer less than m.

Based on the foregoing technical solution, when the page table corresponding to the first process is a multi-level page table, indication information indicating a next-level page table address may be added to the first page table entry, to implement application of the technical solution in a multi-level page table scenario.

With reference to the first aspect or the second aspect, in some implementations of the first aspect or the second aspect, the first page table entry further includes type indication information, and the type indication information indicates that the first page table entry is a page table entry that is capable of indicating the virtual address range.

Based on the foregoing technical solution, the first page table entry may include the type indication information, to indicate that the first page table entry is the page table entry that is capable of indicating the virtual address range. After obtaining the page table entry, the memory management unit may determine, based on the type indication information in the page table entry, whether the page table entry is a page table entry having the function of indicating the virtual address range. If the page table entry is the page table entry having the function of indicating the virtual address range, the memory management unit parses the page table entry in a manner of parsing the page table entry having the function of indicating the virtual address range. If the page table entry is not the page table entry having the function of indicating the virtual address range, the memory management unit parses the page table entry in a manner of parsing a conventional page table entry.

With reference to the first aspect or the second aspect, in some implementations of the first aspect or the second aspect, when the first physical memory is less than the requirement of the first process for a physical memory, the first page table entry further includes information indicating a second virtual address range, where the second virtual address range corresponds to a second virtual memory space, and a size of the second virtual memory space is equal to a size of a second physical memory allocated to the first process; or the first page table further includes a second page table entry, where the second page table entry is used to determine the second physical memory allocated to the first process.

With reference to the first aspect or the second aspect, in some implementations of the first aspect or the second aspect, when the second page table entry does not have the function of indicating the virtual address range, the quantity of bytes occupied by the first page table entry is an integer multiple of a quantity of bytes occupied by the second page table entry.

Based on the foregoing technical solution, a quantity of bytes occupied by a page table entry having the function of indicating the virtual address range designed in this application is an integer multiple of a quantity of bytes occupied by a page table entry not having the function of indicating the virtual address range, so that a size of the quantity of bytes occupied by the page table entry may remain unchanged. This improves backward compatibility.

According to a third aspect, an apparatus for accessing a memory is provided. The apparatus includes: a storage module, configured to store a program; and a processing module, configured to execute the program stored in the storage module. When the program stored in the storage module is executed, the processing module is configured to perform the methods provided in the foregoing aspects.

According to a fourth aspect, a computer-readable storage medium is provided. The computer-readable medium stores program code executed by a device, and the program code is used to perform the methods provided in the foregoing aspects.

According to a fifth aspect, a computer program product including instructions is provided. When the computer program product runs on a computer, the computer is caused to perform the methods provided in the foregoing aspects.

According to a sixth aspect, a chip is provided. The chip includes a processing module and a communication interface. The processing module reads, through the communication interface, instructions stored in a memory, to perform the methods provided in the foregoing aspects.

Optionally, in an implementation, the chip may further include a storage module. The storage module stores instructions. The processing module is configured to execute the instructions stored in the storage module. When the instructions are executed, the processing module is configured to perform the methods provided in the foregoing aspects.

According to a seventh aspect, a chip is provided. The chip includes a processor core configured to perform the method provided in the first aspect and a memory management unit configured to perform the method provided in the second aspect.

According to an eighth aspect, a computer device is provided. The computer device includes the chip shown in the seventh aspect.

According to a ninth aspect, a terminal device is provided. The terminal device includes the chip shown in the seventh aspect. For example, the terminal device includes but is not limited to a terminal like a mobile phone or a vehicle.

### BRIEF DESCRIPTION OF DRAWINGS

FIG. 1 is a diagram of a hardware structure of a computer device (or a computer system) applicable to a method for accessing a memory according to an embodiment of this application;
FIG. 2 is a diagram in which an MMU performs address translation on a four-level page table in an X86 operating system;
FIG. 3 is a diagram of a page table management mechanism for an ARM architecture;
FIG. 4 is a schematic flowchart of a method for accessing a memory according to this application;
FIG. 5 is a diagram of indicating a virtual address according to an embodiment of this application;
FIG. 6(a) is a diagram of a first page table according to an embodiment of this application;
FIG. 6(b) to FIG. 6(d) are diagrams of first page table entries according to embodiments of this application;
(a) in FIG. 7 is a diagram of a page table according to an embodiment of this application;

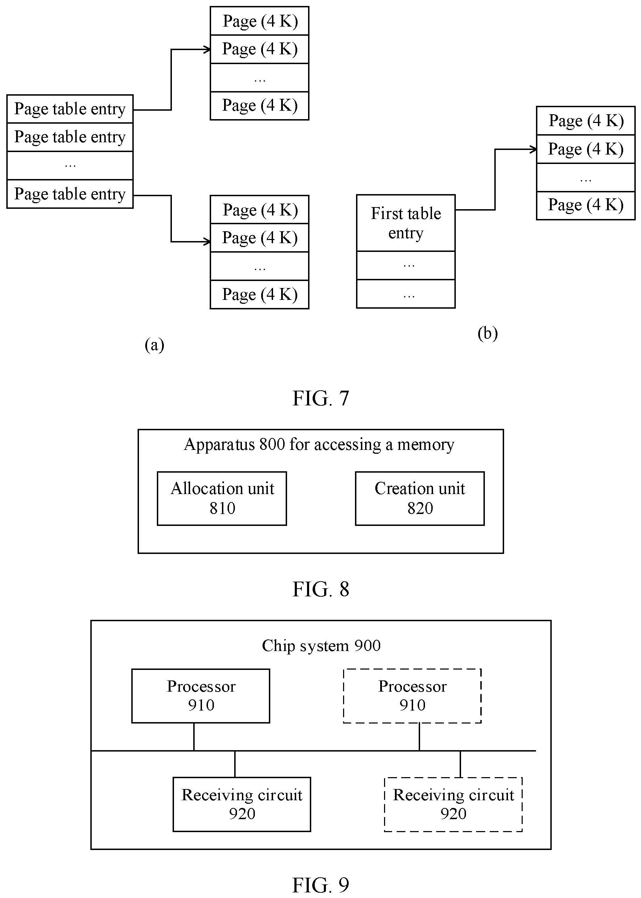

(b) in FIG. 7 is a diagram of another page table according to an embodiment of this application,
FIG. 8 is a diagram of a structure of an apparatus 800 for accessing a memory according to an embodiment of this application,
FIG. 9 is a diagram of a structure of a chip system 900 according to an embodiment of this application, and

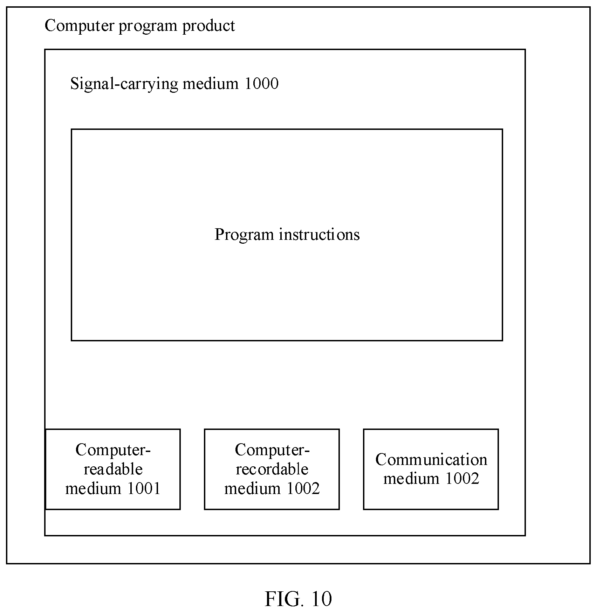

FIG. 10 schematically shows a conceptual partial view of a computer program product according to an embodiment of this application.

### DESCRIPTION OF EMBODIMENTS

The following describes embodiments of this application with reference to accompanying drawings. It is clear that the described embodiments are merely some rather than all of embodiments of this application. A person of ordinary skill in the art may know that with development of technologies and emergence of new scenarios, technical solutions provided in embodiments of this application are also applicable to similar technical problems.

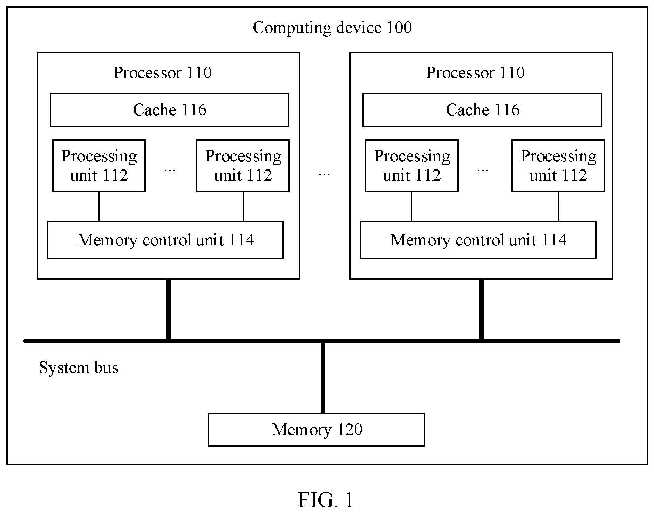

A method for accessing a memory provided in embodiments of this application is applied to a computer system. The computer system may be a server, a terminal device, a virtual machine (virtual machine, VM), or a container (container). For an architecture of the computer system, refer to FIG. 1 for understanding. FIG. 1 is a diagram of an architecture of a computer system.

A computing device may also be referred to as a computer system. From a perspective of logical layering, the computing device may include a hardware layer, an operating system layer that runs above the hardware layer, and an application layer that runs above the operating system layer. The hardware layer includes hardware such as a processing unit, a memory, and a memory control unit. Subsequently, functions and structures of the hardware are described in detail. The operating system may be any one or more types of computer operating systems that implement service processing through a process (process), for example, a Linux operating system, a Unix operating system, an Android operating system, an iOS operating system, or a Windows operating system. The application layer includes applications such as browser, contacts, word processing software, and instant messaging software. In addition, in embodiments of this application, the computer system may be a handheld device like a smartphone, or may be a terminal device like a personal computer. This is not specifically limited in this application, provided that the computer system can read program code that records a method for monitoring memory access behavior of a sample process in embodiments of this application, and run the program code, to monitor the sample process based on the method for monitoring the memory access behavior of the sample process in embodiments of this application. The method for monitoring the memory access behavior of the sample process in embodiments of this application may be performed by the computer system, or may be performed by a functional module that can invoke a program and execute the program in the computer system.

In this application, the program or the program code refers to a group of ordered instructions (or code) used to implement a relatively independent function. The process is a procedure in which a program and data of the program run on a computer device. The program is usually designed through modularization, to be specific, a function of the program is detailed and decomposed into a plurality of smaller functional modules. The program includes at least one function, and the function is a code segment for implementing one functional module. Therefore, the function is a basic unit of function modularization of the program, and may also be considered as a subprogram.

FIG. 1 is a diagram of an architecture of a computing device 100 according to an embodiment of this application. The computing device shown in FIG. 1 is configured to perform a process monitoring method. The computing device 100 may include at least one processor 110 and a memory 120.

Optionally, the computer device 100 may further include a system bus, and the processor 110 and the memory 120 are separately connected to the system bus. The processor 110 can access the memory 120 through the system bus. For example, the processor 110 can read and write data or execute code in the memory 120 through the system bus.

A function of the processor 110 is mainly to interpret an instruction (or code) of a computer program and process data in computer software. The instruction of the computer program and the data in the computer software may be stored in the memory 120 or a cache unit 116.

In embodiments of this application, the processor 110 may be an integrated circuit chip, and has a signal processing capability. By way of example rather than limitation, the processor 110 may be a general-purpose processor, a system-on-chip (System-On-Chip, SOC), an application-specific integrated circuit (application-specific integrated circuit, ASIC), a field programmable gate array (field programmable gate array, FPGA) or another programmable logic device, a discrete gate or transistor logic device, a discrete hardware component, or any combination of the foregoing components. The general-purpose processor may be a microprocessor or the like. Each processor 110 includes a memory control unit 114 and at least one processing unit 112. The processing unit 112 may also be referred to as a core (core), a kernel, a processor core, or a central processing unit (central processing unit, CPU), and is a most important component of the processor. The processing unit 112 may be made from monocrystalline silicon by using a specific production process, and all calculation, acceptance commands, storage commands, and data processing of the processor are executed by the core. The processing unit may independently run a program instruction, and accelerate a running speed of a program by using a parallel computing capability. Various processing units have a fixed logical structure. For example, the processing unit includes logical units such as an execution unit, an instruction-level unit, and a bus interface.

The memory control unit 114 is configured to control data exchange between the memory 120 and the processing unit 112. Specifically, the memory control unit 114 may receive a memory access request from the processing unit 112, and control access to the memory based on the memory access request. By way of example rather than limitation, in embodiments of this application, the memory control unit may be a component like a memory management unit (memory management unit, MMU).

In embodiments of this application, each memory control unit 114 may address the memory 120 through the system bus. In addition, an arbiter (which is not shown in the figure) may be configured in the system bus, and the arbiter may be responsible for processing and coordinating contention-based access of a plurality of processing units 112.

In embodiments of this application, the processing unit 112 may be communicatively connected to the memory control unit 114 through a connection line such as an address line inside a chip, to implement communication between the processing unit 112 and the memory control unit 114.

Optionally, each processor 110 may further include a cache unit 116, and a cache is a data exchange buffer (referred to as a cache). When the processing unit 112 needs to read data, the processing unit 112 first searches the cache for the required data. If the data is found, the processing unit 112 directly reads the data; or if the data is not found, the processing unit 112 searches the memory for the data. Because the cache runs much faster than the memory, a function of the cache is to help the processing unit 112 run faster.

The memory (memory) 120 may provide a running space for a process in the computing device 100, for example, the memory 120 may store a computer program (specifically, code of the program) for generating the process. In addition, the memory 120 may store data generated during running of the process, for example, intermediate data or procedure data. The memory may also be referred to as an internal memory, and is configured to temporarily store operation data in the processor 110 and data exchanged with an external memory like a hard disk. Provided that the computing device runs, the processor 110 invokes data that needs to be operated to the memory for an operation, and the processing unit 112 sends a result after the operation is completed.

By way of example rather than limitation, in embodiments of this application, the memory 120 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory 120 of the systems and methods described in this specification includes but is not limited to these and any memory of another inappropriate type.

It should be understood that the foregoing listed structure of the computing device 100 is merely an example for description, and this application is not limited thereto. The computing device 100 in embodiments of this application may include various types of hardware in a computer system in the conventional technology. For example, the computing device 100 may further include a memory other than the memory 120, for example, a magnetic disk memory.

For ease of understanding embodiments of this application, some basic concepts in this application are briefly described.
1. Virtual address: The virtual address is an address that can be identified or generated by an operating system in an address space, and a size range of the virtual address may be determined by a quantity of bits of the operating system running in a processor. For example, if the operating system running in the processor is 32-bit, and the virtual address is also 32-bit, a virtual address range of the virtual address is 0 to 0xFFFFFFFF (4 GB). If the operating system running in the processor is 64-bit, and the virtual address is also 64-bit, an address space of the virtual address is 0 to 0xFFFFFFFFFFFFFFFF (16 EB).
   The virtual address may be divided into a plurality of virtual address spaces based on an actual requirement, for example, a user mode address space and a kernel mode address space. The user mode address space may be accessed by a user mode program (for example, reading, writing, opening, closing, or drawing) and a kernel mode program (for example, process management, storage management, file management, or device management). The kernel mode address space may be accessed only by the kernel mode program during running.
2. Physical address: The physical address may be an address in an address space actually owned by a hardware storage device like an internal memory.
3. Virtual page: The virtual page may also be referred to as a page (page). An MMU may use a paging mechanism to manage virtual address spaces in virtual pages, and each page may include a virtual address space of a preset size. The virtual address space may include more than one virtual address, and one virtual address space may correspond to one page table set. The page table set may be used to determine a physical address corresponding to a virtual address of the virtual address space. The page table set may include a first-level page table, or the page table set may include a first-level page table and at least one secondary page table. The secondary page table may include a second-level page table, a third-level page table, or even a lower-level page table.
   Correspondingly, the MMU may determine, through at least one-level mapping, the physical address corresponding to the virtual address, and a quantity of levels of mapping is consistent with a quantity of levels of the page table set. For example, when the physical address corresponding to the virtual address is determined through one-level mapping, the one-level mapping is referred to as segment mapping, and the page table set may include only a first-level page table. When the physical address corresponding to the virtual address is determined through two-level mapping, the two-level mapping is referred to as page mapping, and the page table set may include a first-level page table and at least one second-level page table.
4. Physical page: In a Linux kernel, an MMU is mainly configured to map a "virtual address" to a real "physical address". Specifically, the MMU uses a physical page (page) as a basic unit for memory management, and different architectures support different physical page sizes. For example, in a 32-bit architecture, a supported physical page size is 4 kilobytes (kilobyte, KB); in a 64-bit architecture, a supported physical page size is 8 KB; and in a 128-bit architecture, a supported physical page size is 16 KB.
   Physical page classification is usually subject to a requirement. A 4 KB page is usually referred to as a normal page, and a page greater than 4 KB is usually referred to as a "large page". For example, both a 2 megabyte (megabyte, MB) page and a 1 gigabyte (GigaByte, GB) page are referred to as large pages. Certainly, the large page may have another specification, but is usually an integer multiple of 4 KB.
5. Page table (page table): The page table is a special data structure stored in a memory. The page table may be used as an index of a virtual address space and may include a plurality of page table entries. Each page table entry includes an association relationship between a page table entry index address and a physical address. The physical address may be carried in a page table descriptor of the page table entry. The page table descriptor may indicate a base address of a next-level page table or a base address of a physical address corresponding to a virtual address. For example, in one-level mapping, a page table descriptor in a first-level page table indicates a segment base address, and the segment base address is a base address of a physical address corresponding to a virtual address. In two-level mapping, a page table descriptor in a first-level page table indicates a base address of a second-level page table, a page table descriptor in the second-level page table may indicate a page base address, and the page base address is a base address of a physical address of a page corresponding to a virtual address.

Certainly, in actual application, the page table descriptor may further indicate more information related to virtual-physical address mapping. For example, the page table descriptor further includes a mapping level indicator bit and a granularity indicator bit. The mapping level indicator bit may indicate a mapping level of current mapping or whether next-level mapping exists (that is, one-level mapping or two-level mapping). The granularity indicator bit may indicate a granularity indicator bit (that is, a size of a virtual address space associated with a page table) of segment mapping or page mapping.

Specifically, the page table is usually placed in a page table area in a system memory, and indicates a correspondence between a virtual address (Virtual Address, VA) of a process and a physical address (physical address, PA) in the memory. In this way, in a procedure of translating the virtual address of the process to the physical address, the MMU may use a page table corresponding to the process to index the physical address. The virtual address may also be referred to as a logical address. It should be noted that each process has a page table.

In embodiments of this application, the page table corresponding to the process may be an m-level page table, where m is a positive integer.

For example, the page table may be a two-level page table. In this case, the two-level page table includes a first-level page table and a second-level page table. For another example, the page table may be a four-level page table. In this case, the four-level page table includes a first-level page table, a second-level page table, a third-level page table, and a fourth-level page table. Each level of page table includes a plurality of page table entries (entry).

For example, the page table is a four-level page table. In the four-level page table, a first-level page table (namely, a level 0) includes a plurality of page table entries, and one of the plurality of page table entries may indicate a base address of a second-level page table. The second-level page table (namely, a level 1) includes a plurality of page table entries, and one of the plurality of page table entries may indicate a base address of a third-level page table. The third-level page table (namely, a level 2) includes a plurality of page table entries, and one of the plurality of page table entries may indicate a base address of a fourth-level page table. The fourth-level page table (namely, a level 3) includes a plurality of page table entries, and one of the plurality of page table entries may indicate a base address of a physical page.

An X86 operating system is used as an example. The first-level page table may be a page map level 4 (page map level 4, PML4), the second-level page table may be a page directory pointer table (page directory pointer table, PDPT), the third-level page table may be a page directory (page directory, PD), and the fourth-level page table may be a page table (page table, PT).

6. Page table translation: When a processor core in a processor needs to access a memory when running a process, the processor core usually sends a virtual address of the process to a memory management unit (memory management unit, MMU), so that the MMU translates the virtual address of the process to a physical address of a memory according to a page table corresponding to the process. This procedure is referred to as page table translation (or referred to as address translation, address conversion, or the like).

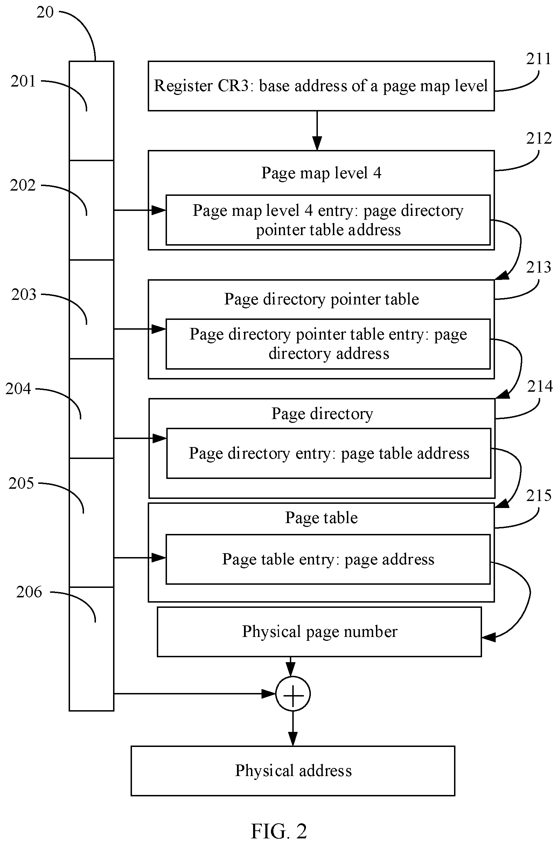

With reference to FIG. 2, the following briefly describes a procedure in which the MMU translates the virtual address of the process to the physical address of the memory by using an example in which the page table is a four-level page table and a single-page size of a physical page is 4 K.

FIG. 2 is an example of a diagram in which an MMU performs address translation on a four-level page table in an X86 operating system. As shown in FIG. 2, when a processor core in a processor starts to run a process 1, the processor core may write a base address of a PML4 corresponding to the process into a control register CR3.

When the processor core needs to access a memory when running the process 1, and a physical memory page to be accessed by the processor core is a miss in a cache (in other words, the physical page does not exist in the cache), the processor core sends a virtual address 20 of the process 1 to the MMU.

In the X86 operating system, the virtual address 20 may include 64 bits. Generally, 12 most significant bits (namely, a virtual address segment 201 shown in FIG. 2) in the 64 bits have no actual meaning, and may be referred to as invalid bits.

In this way, valid address bits of the virtual address 20 include 48 least significant bits, and specifically include a virtual address segment 202, a virtual address segment 203, a virtual address segment 204, a virtual address segment 205, and a virtual address segment 206 shown in FIG. 2. The virtual address segment 202 indicates a PML4 entry index (PML4 entry index), that is, a first-level page table entry index. The virtual address segment 203 indicates a PDPT entry index (PDPT entry index), that is, a second-level page table entry index. The virtual address segment 204 indicates a PD entry index (PD entry index), that is, a third-level page table entry index. The virtual address segment 205 indicates a PT entry index (PT entry index), that is, a fourth-level page table entry index. The virtual address segment 206 indicates a page offset (page offset).

It should be understood that the MMU is usually disposed in the foregoing processor. In a processor including a plurality of processor cores, the processor may include a plurality of MMUs, and the plurality of MMUs one-to-one correspond to the plurality of processor cores. Alternatively, in a processor including a plurality of processor cores, the processor may include one MMU, in other words, the plurality of processor cores share the one MMU. This is not specifically limited in embodiments of this application.

Further, as shown in FIG. 2, the MMU obtains the base address of the PML4 from the register CR3 211, and reads, from the memory based on the base address, a physical page 212 indicating the PML4. Then, the MMU adds bits 39 to 47 (for example, the virtual address segment 202 shown in FIG. 2) in the virtual address to the obtained base address of the PML4, to obtain an entry that is in the PML4 and that indicates a base address of a PDPT. Content in the entry is the base address of the PDPT.

Further, the MMU reads, from the memory based on the base address of the PDPT, a physical page 213 indicating the PDPT. Then, the MMU adds bits 30 to 38 (for example, the virtual address segment 203 shown in FIG. 2) in the virtual address to the base address of the PDPT, to obtain an entry that is in the PDPT and that indicates a base address of a PD. Content in the entry is the base address of the PD.

Further, the MMU reads, from the memory based on the base address of the PD, a physical page 214 indicating the PD. Then, the MMU adds bits 21 to 29 (for example, the virtual address segment 204 shown in FIG. 2) in the virtual address to the base address of the PD, to obtain an entry that is in the PD and that indicates a base address of a PT. Content in the entry is the base address of the PT.

Further, the MMU reads, from the memory based on the base address of the PT, a physical page 215 indicating the PT. Then, the MMU adds bits 12 to 20 (for example, the virtual address segment 205 shown in FIG. 2) in the virtual address to the base address of the PT, to obtain an entry that is in the PT and that indicates a base address of a page (page). The "page" herein is a physical page. Content in the entry is the base address of the physical page.

Further, the MMU shifts the base address of the physical page by 12 bits rightwards, to obtain a physical page number (physical page number, PPN) of the physical page. Then, the MMU adds bits 0 to 11 (for example, the virtual address segment 206 shown in FIG. 2) in the virtual address to the PPN, to obtain a physical address corresponding to the virtual address. That is, the MMU completes translation from the virtual address to the physical address.

7. Page table entry (Page Table Entry, PTE): A page table includes a plurality of page table entries, that is, each row in the page table is one page table entry. In an example of a 64-bit system, a size of a page table entry is 8 bytes (byte, B). Information recorded in the page table entry includes:
a page frame number, recording a specific physical page corresponding to a virtual page;
a valid bit (V), identifying whether the virtual page corresponding to the page table entry is read into a memory, otherwise, on a disk.
an access bit, namely, a reference bit, identifying whether the virtual page has been accessed;
a modification bit, indicating whether the virtual page has been modified in the memory, where if the virtual page has been modified, the virtual page is about to be persisted to a disk in the future, and this flag is used for this purpose; and
a protection bit, identifying permissions such as read and write permissions of the virtual page.

8. Radix tree (radix tree) mechanism: The radix tree mechanism is a mechanism for associating a pointer with a long integer value, and has high storage efficiency and quick query. A radix tree is a multi-ary search tree, and leaf nodes of the tree are actual data entries. Constantly, each node has 2^n pointers pointing to child nodes, and a pointer pointing to a parent node. A Linux kernel quickly locates a file cache page based on the radix tree and an offset in a file.

In addition, to facilitate understanding of embodiments of this application, the following several descriptions are provided.

First, "at least one" shown in this application means one or more, and "a plurality of" means two or more. In addition, in embodiments of this application, "first", "second", and various numbers (for example, "#1" and "#2") are merely used for differentiation for ease of description, and are not used to limit the scope of embodiments of this application. The sequence numbers in the following procedures do not mean execution sequences. The execution sequences of the procedures should be determined based on functions and internal logic of the procedures, and should not constitute any limitation on implementation procedures of embodiments of this application. It should be understood that, objects described in this way may be interchangeable in inappropriate cases, so that solutions other than embodiments of this application can be described. In addition, in embodiments of this application, words such as "S310" are merely identifiers for ease of description, and do not limit a sequence of performing steps.

Second, in embodiments of this application, the terms such as "example" or "for example" are used to represent giving an example, an illustration, or a description. Any embodiment or design scheme described as an "example" or "for example" in this application should not be explained as being more preferred or having more advantages than another embodiment or design scheme. To be precise, use of the word like "example" or "for example" is intended to present a relative concept in a specific manner.

Third, "storing" in embodiments of this application may mean "stored in one or more memories". The one or more memories may be separately disposed, or may be integrated into an encoder, a decoder, a processor, or a communication apparatus. Alternatively, some of the one or more memories may be separately disposed, and some may be integrated into a decoder, a processor, or a communication apparatus. A type of the memory may be a storage medium in any form. This is not limited in this application.

Fourth, in embodiments of this application, a term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their combinations not excluded.

Fifth, the term "if" in embodiments of this application may be interpreted as a meaning "when" ("when" or "upon"), "in response to determining", or "in response to detecting". Similarly, according to the context, a phrase "if determining" or "if detecting (a stated condition or event)" may be interpreted as a meaning of "when determining", "in response to determining", "when detecting (a stated condition or event)", or "in response to detecting (a stated condition or event)".

Sixth, in embodiments of this application, the terms used in the descriptions of the various examples in this specification are merely intended to describe specific examples and are not intended to impose a limitation. Terms "one" ("a" and "an") and "the" of singular forms used in the descriptions of the various examples and the appended claims are also intended to include plural forms, unless otherwise specified in the context clearly.

Seventh, the term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between associated objects.

With reference to FIG. 1, the foregoing briefly describes the scenario to which the method for accessing a memory provided in this application is applicable, and describes the basic concepts in this application. It can be learned from the "page table" introduced in the basic concept that when a process needs to access a physical page, a page table of the process may be walked to find a corresponding page table entry, to access the corresponding physical page.

With development of a chip scale, a memory is increasingly large, and a performance requirement for memory access is increasingly high. This brings a great challenge to memory page table management. Memory page table management mechanisms for an existing mainstream ARM architecture and X86 architecture is universal. However, it is difficult to show advantages in scenarios with ultimate performance requirements. In addition, a hierarchical paging page table mechanism also brings high memory overheads.

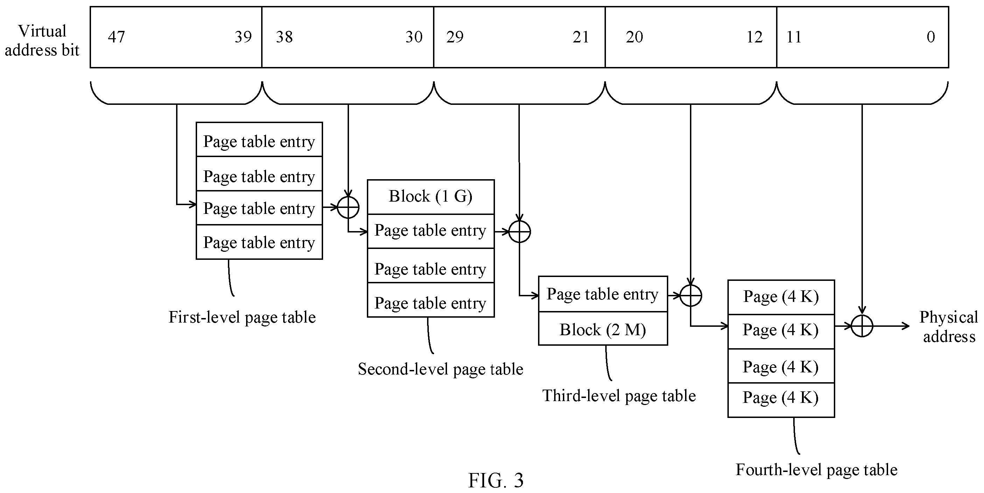

For example, FIG. 3 is a diagram of a page table management mechanism for an ARM architecture. The page table management mechanism is a four-level page table mechanism, including a first-level page table, a second-level page table, a third-level page table, and a fourth-level page table. Refer to FIG. 3. In the first-level page table, bits [47:39] indicate page table entry indexes in the first-level page table, bits [38:30] indicate page table entry indexes in the second-level page table, bits [29:21] indicate page table entry indexes in the third-level page table, bits [20:12] indicate page table entry indexes in the fourth-level page table, and bits [11:0] indicate a virtual page offset. The virtual page offset is used for an operation on an address that is in a page table entry and that directly points to a physical memory block, to obtain a physical address.

Specifically, in the page table management mechanism for the ARM architecture shown in FIG. 3, a plurality of page table entries of the first-level page table include a page table entry of a table type (for example, one or more page table entries in the plurality of page table entries of the first-level page table shown in FIG. 3) that indicates a base address of the second-level page table; a plurality of page table entries of the second-level page table include a page table entry of a table type (for example, one or more page table entries in the plurality of page table entries of the second-level page table shown in FIG. 3) that indicates a base address of the third-level page table; and a plurality of page table entries of the third-level page table include a page table entry of a table type (for example, a page table entry of the third-level page table shown in FIG. 3) that indicates a base address of the fourth-level page table.

In addition, the page table management mechanism for the ARM architecture shown in FIG. 3 may support both a normal page and a large page. For example, the second-level page table includes a page table entry that is of a block (block) type and that supports a granularity of 1 GB (for example, a page table entry of a block type included in the second-level page table in FIG. 3), the third-level page table includes a page table entry that is of a block (block) type and that supports a granularity of 2 MB (for example, a page table entry of a block type included in the third-level page table in FIG. 3), and a fourth-level page table includes a page table entry that is of a page (page) type and that supports a granularity of 4 KB (for example, a page table entry of a page type included in the fourth-level page table in FIG. 3). Supporting the granularity of 1 GB or the granularity of 2 MB may be understood as supporting the large page. In this case, page table translation may be performed based on a page table entry supporting the large page, to determine that a physical memory is a 1 GB or 2 MB space. Supporting the granularity of 4 KB may be understood as supporting the normal page. In this case, page table translation may be performed by using a page table entry supporting the normal page, to determine that a physical memory is a 4 KB space. In other words, the page table management mechanism for the ARM architecture shown in FIG. 3 may cover a memory fragmentation scenario by supporting the normal page, and cover a memory contiguity scenario by supporting the large page.

For example, if a process in the ARM architecture requires a physical memory of 56 KB, 14 physical pages of 4 KB may be allocated. In a procedure of executing the process to perform address translation, a processor needs to walk through to the last-level page table of the four-level page table shown in FIG. 3 to complete translation from a virtual address to a physical address. In addition, page table entries corresponding to 14 page tables supporting the normal page and page table entries of a plurality of previous-level page tables (for example, a first-level page table, a second-level page table, and a third-level page table) corresponding to each of the 14 page tables need to be created.

For another example, if a process in the ARM architecture requires a physical memory of 2 M, a 2 M physical page may be allocated. In a procedure of executing the process to perform address translation, a processor needs to walk through to the third-level page table of the four-level page table shown in FIG. 3 to complete translation from a virtual address to a physical address. In addition, a page table entry corresponding to one page table supporting the large page and page table entries of previous-level page tables (for example, a first-level page table and a second-level page table) corresponding to the page table are created.

However, it should be noted that, in the page table management mechanism for the ARM architecture shown in FIG. 3, a granularity gap between the normal page and the large page is large, resulting in low large page usage. Consequently, page tables of a plurality of contiguous normal pages that cannot form a large page occupy a large amount of memory space. In addition, due to the low large page usage, a TLB is occupied by excessive normal pages, and an address range of the TLB is reduced, resulting in a low TLB hit rate.

It should be further noted that the page table management mechanism shown in FIG. 3 is merely an example. Currently, in page table management mechanisms for other architectures (for example, X86, RISC-V, and MIPS), a granularity gap between a normal page and a large page is also large, resulting in low large page usage. For example, for a 64-bit architecture, a normal page is 8 KB, and a large page may be 512 M.

For ease of understanding, the following describes, with reference to a specific example, a problem caused by the large granularity gap between the normal page and the large page.

For example, a process in the ARM architecture requires a physical memory of 1 MB. The page table management mechanism for the ARM architecture shown in FIG. 3 includes page table entries supporting the granularities of 1 GB, 2 MB, and 4 KB, but does not include a page table entry supporting a granularity of 1 MB. Therefore, the processor allocates 256 page tables of 4 KB to the process. In a procedure of executing the process to perform address translation, the processor needs to walk through to the last-level page table of the four-level page table shown in FIG. 3 to complete translation from a virtual address to a physical address. In addition, page table entries corresponding to 256 page tables supporting the normal page and page table entries of a plurality of previous-level page tables (for example, a first-level page table, a second-level page table, and a third-level page table) corresponding to each of the 256 page tables need to be created. Consequently, a TLB is occupied by excessive normal pages, and an address range of the TLB is reduced, resulting in a low TLB hit rate.

To resolve the large granularity gap between the normal page and the large page in the current page table management mechanism, this application provides a method for accessing a memory, to resolve a gap between the normal page and the large page in the page table management mechanism shown in FIG. 3 by designing a page table entry supporting a physical page of a flexible size, so that a system can better manage a page table based on actual memory distribution. The following describes in detail the method for accessing a memory provided in this application with reference to the accompanying drawings.

It should be understood that the method for accessing a memory provided in embodiments of this application may be applied to a computer system, for example, the system shown in FIG. 1.

It should be further understood that a specific structure of an execution body of the method provided in embodiments of this application is not specifically limited in the following embodiments, provided that the method provided in embodiments of this application can be implemented by running a program that records code of the method provided in embodiments of this application. For example, the execution body of the method provided in embodiments of this application may be a device, or may be a functional module that is in the device and that can invoke a program and execute the program.

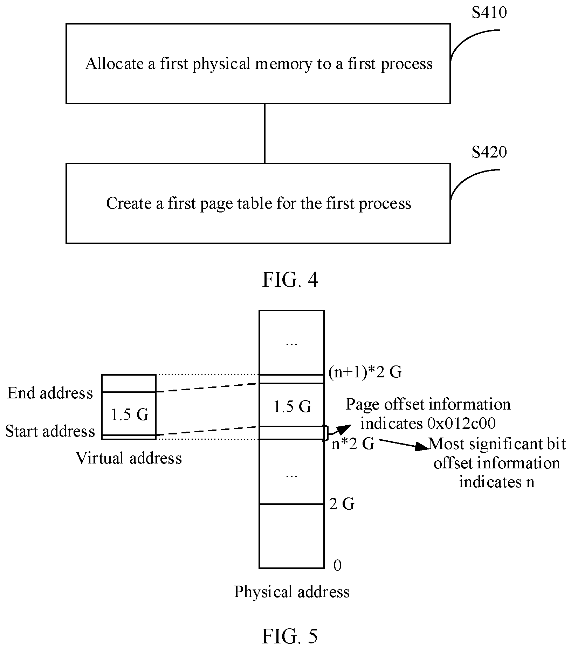

FIG. 4 is a schematic flowchart of a method for accessing a memory according to this application. The method is applied to a processor. The processor includes at least one processor core and at least one memory management unit, and a first process runs in the processor core. It should be understood that the first process is any process running in the processor core. This is not limited. For example, two processes, namely, the first process and a second process, run in the processor core.

In a possible implementation, the processor including the at least one processor core and the at least one memory management unit may be the processor 110 shown in FIG. 1. The processor core is equivalent to the processing unit 112 shown in FIG. 1, and the memory management unit is equivalent to the memory control unit 114 shown in FIG. 1. In this implementation, the processor core and the memory management unit may be understood as different functional parts of the processor 110, and steps performed by the processor core and the memory management unit may be understood as steps performed by the processor. For example, the processor core may be a CPU, and the memory management unit may be an MNU. It should be noted that a name of an execution body of the method provided in this embodiment of this application is not limited, provided that a corresponding function can be implemented.

The method for accessing a memory includes the following steps.

S410: Allocate a first physical memory to the first process.

Specifically, a size of the first physical memory is determined based on a size of a contiguous free physical memory in the memory and a requirement of the first process for a physical memory. The requirement of the first process for a physical memory is a physical memory amount required by the first process, for example, may be 56 KB, 1 MB, 2 MB, 10 GB, or another possible value. This is not limited in this embodiment. The size of the contiguous free physical memory in the memory may be actual memory distribution when the processor core executes the first process. For example, the actual memory distribution may be that there is a 512 KB contiguous space and several discrete 4 KB spaces, or the actual memory distribution may be that there is a 1 MB contiguous space and several discrete 4 KB spaces, or other possible distribution. This is not limited in this embodiment.

It should be understood that, in this embodiment, when running the first process, the processor core may allocate a physical memory of an appropriate size to the first process based on current actual memory distribution and the requirement of the first process for a physical memory, instead of allocating a physical page sized 4 KB, 2 MB, or another default size by default, so that a system can better manage the process based on the actual memory distribution. Compared with the case in which the four-level page table shown in FIG. 3 supports covering of memory contiguity based on the large page, in this embodiment, a size of a supported physical memory may be flexibly set, to avoid a limitation of a large gap between physical memory granularities supported by page table entries. In this way, the page table entry can be better managed based on the actual memory distribution.

For ease of understanding, the following describes, with reference to specific examples, how the processor core allocates the first physical memory of an appropriate size to the first process in this embodiment.

Example 1: The size of the contiguous free physical memory in the memory includes a 1 MB contiguous space, and the requirement of the first process for a physical memory is also 1 MB. In this case, the processor core may allocate the 1 MB contiguous space to the first process, and the first physical memory may be understood as the 1 MB contiguous space.

Example 2: The size of the contiguous free physical memory in the memory includes a 1 MB contiguous space and a 1 GB contiguous space, and the requirement of the first process for a physical memory is 1 GB+1 MB. In this case, the processor core may allocate both the 1 MB contiguous space and the 1 GB contiguous space to the first process. In other words, in this embodiment of this application, a plurality of physical memories of appropriate sizes may be allocated to the first process.

Example 3: The size of the contiguous free physical memory in the memory includes a 512 KB contiguous space and several discrete 4 KB spaces, and the requirement of the first process for a physical memory is 1 MB. In this case, the processor core may allocate the 512 KB contiguous space to the first process, and 128 spaces of 4 KB are also allocated to the first process. In other words, when a size of a currently free contiguous space does not meet the requirement of the first process, a plurality of small discrete spaces may be allocated to the first process to meet the requirement of the first process for the memory.

It should be understood that the foregoing examples 1 to 3 are merely examples for describing possible manners in which the processor core allocates the first physical memory to the first process in this embodiment, and do not constitute any limitation on the protection scope of this application. Specifically, the size of the first physical memory, a quantity of physical memories of appropriate sizes, an allocation mode, and the like may further have other possible forms. Examples are not enumerated herein.

Further, after allocating the appropriate first physical memory to the first process, the processor core records allocation information of the first physical memory in a first page table corresponding to the first process in a form of a page table entry, where the page table entry is row information in the page table. In addition, a design of a page table corresponding to the first physical memory in this embodiment is different from a page table form in a current related technology (for example, the page table shown in FIG. 3). In this embodiment, information about the first physical memory is recorded in an n^{th}-level page table in the first page table. In this case, the method procedure shown in FIG. 4 further includes the following step.

S420: Create the first page table for the first process.

Specifically, the first page table is used to implement translation from a virtual address of the first process to a physical address when the first process accesses the memory. When the processor core needs to access the memory when running the first process, the processor core usually sends the virtual address of the first process to the MMU, so that the MMU translates the virtual address of the first process to the physical address of the memory based on the first page table corresponding to the first process, to access the memory.

Specifically, the MMU receives an access request for the memory initiated by the processor core, and the access request includes a first virtual address of the first process. The MMU reads, based on configuration information and the first virtual address, a page table entry from the first page table corresponding to the first process. The configuration information indicates that at least one page table entry in the first page table has a function of indicating a virtual address range.

In this embodiment, the first page table is an m-level page table, where m is a positive integer. For example, when a value of m is 1, the first page table is a one-level page table. In other words, the first page table includes a first-level page table, and the first-level page table includes a page table entry that records the information about the first physical memory. For another example, when a value of m is greater than 1, the first page table is a multi-level page table, and an n^{th} level in the multi-level page table includes a page table entry that records the information about the first physical memory, where n is a positive integer less than or equal to m.

In this embodiment, the n^{th}-level page table includes a first page table entry, and the first page table entry is used to record the information about the first physical memory. Specifically, the first page table entry includes information indicating a first virtual address range, the first virtual address range corresponds to a first virtual memory space, and a size of the first virtual memory space is equal to the size of the first physical memory. For example, if the size of the first physical memory is 1 MB, the first virtual memory space indicated by the first virtual address range is 1 MB. For another example, if the size of the first physical memory is 512 KB, the first virtual memory space indicated by the first virtual address range is 512 KB.

For example, in this embodiment, the first page table entry may indicate the first virtual address range in the following several possible implementations.

In a possible implementation, the first page table entry includes first indication information and second indication information. The first indication information and the second indication information indicate the first virtual address range, where the first indication information indicates a start address of the first virtual address range, and the second indication information indicates an end address of the first virtual address range.

For example, the first page table entry includes the first indication information indicating that the start address of the first virtual address range is 0xA, and the second indication information indicating that the end address of the first virtual address range is 0xB. In this case, the first virtual address range is a range from 0xA to 0xB.

In another possible implementation, the first page table entry includes the first indication information and third indication information. The first indication information and the third indication information indicate the first virtual address range, where the first indication information indicates the start address of the first virtual address range, and the third indication information indicates a span of the first virtual address range.

For example, the first page table entry includes the first indication information indicating that the start address of the first virtual address range is 0xA, and the third indication information indicating that the span of the first virtual address range is 1.5 G. In this case, the first virtual address range is an address range starting from 0xA and spanning 1.5 G.

In still another possible implementation, the first page table entry includes the third indication information and the second indication information. The second indication information and the third indication information indicate the first virtual address range, where the second indication information indicates the end address of the first virtual address range, and the third indication information indicates the span of the first virtual address range.

For example, the first page table entry includes the second indication information indicating that the end address of the first virtual address range is 0xB, and the third indication information indicating that the span of the first virtual address range is 1.5 G. In this case, the first virtual address range is an address range spanning 1.5 G and ending at 0xB.

It should be understood that the foregoing several possible implementations are merely examples for describing possible forms of indicating the first virtual address range by using the first page table entry, and do not constitute any limitation on the protection scope of this application. The first virtual address range may alternatively be indicated in another manner. For example, the first virtual address range is determined by indicating the start address of the first virtual address range, indicating a step of an address span, and indicating a quantity of steps included in the first virtual address range (for example, indicating that the start address of the first virtual address range is 0xA, indicating that the step of the address span is 1 M, and indicating that the quantity of steps is 1536, where in this case, the first virtual address range is the address range starting from 0xA and spanning 1.5 G). Examples are not enumerated herein.

In addition, to accurately determine a physical memory space corresponding to the first virtual memory space corresponding to the first virtual address range, the first page table entry further includes page offset information and most significant bit offset information. The page offset information indicates an offset of a physical start address of the first physical memory in a first physical page, and the most significant bit offset information indicates a start physical address of the first physical page. The first physical page is a physical page including the first physical memory, and a memory size of the first physical page is a physical memory size indicated by the first page table entry.

For ease of understanding, a correspondence that is between the first virtual address range and the first physical memory and that is indicated in the first page table entry is described in detail with reference to FIG. 5.

FIG. 5 is a diagram of indicating a virtual address according to an embodiment of this application. It can be seen from FIG. 5 that the physical memory size indicated by the first page table entry is 2 GB, and a size of a first physical memory in one of a plurality of 2 GB physical memories in the memory occupied by the first process is 1.5 GB. Therefore, information about 1.5 GB in the 2 GB being occupied by the first process may be recorded by using the first page table entry.

Specifically, the size of the first virtual memory space corresponding to the first virtual address range indicated in the first page table entry is 1.5 GB, and the most significant bit offset information in the first page table entry indicates a page number of the first physical page (the first physical page is a 2 GB physical memory including the 1.5 GB physical memory). The page offset information included in the first page table entry indicates that a start location of the first physical memory corresponding to the first virtual memory space is 0x012C00. Therefore, a physical memory that needs to be accessed by the first process can be accurately determined based on the first page table entry.

In a possible implementation, there is one first physical memory, and a size of a physical memory required by the first process in this embodiment may be greater than the size of the first physical memory. For example, the size of the physical memory required by the first process is 1 MB, but the size of the contiguous free physical memory in the memory is 512 KB. Therefore, the size that is of the first physical memory and that is allocated by the processor core based on the size of the physical memory required by the first process and the size of the contiguous free physical memory in the memory is 512 KB.

Specifically, in this implementation, at least one second physical memory may be allocated to the first process, and a size of the second physical memory is 4 KB. In addition, after the at least one second physical memory is allocated to the first process, allocation information of the at least one second physical memory is recorded in the first page table corresponding to the first process in a form of a page table entry. For example, a p^{th}-level page table in the first page table is created for the first process based on the at least one second physical memory, the p^{th}-level page table includes at least one second page table entry of a same size, and the at least one second page table entry one-to-one corresponds to the at least one second physical memory.

It should be understood that the second page table entry in this implementation may be a page table entry included in the fourth-level page table in the example shown in FIG. 3. It should be further understood that, in this implementation, the first page table includes both the first page table entry and the second page table entry, and the n^{th}-level page table to which the first page table entry belongs is a page table before the p^{th}-level page table to which the second page table entry belongs. For example, if the first page table is a four-level page table, the n^{th}-level page table may be a first-level page table, a second-level page table, or a third-level page table, and the p^{th}-level page table is a fourth-level page table.

It should be noted that the foregoing merely uses an example in which the size of the second physical memory is 4 KB for description. When the size of the contiguous free physical memory in the memory does not meet the size of the physical memory required by the first process, the second physical memory allocated to the first process may be of another size. For example, when the size of the physical memory required by the first process is 2 GB, and the size of the contiguous free physical memory in the memory is 1.5 GB, second physical memories each sized 2 MB may be allocated to the first process. Examples are not enumerated herein.

Specifically, the first page table entry in this embodiment needs to include the information indicating the first virtual address range. Compared with a page table entry in the current related technology (for example, the page table shown in FIG. 3), the first page table entry in this embodiment includes more information. Therefore, in this embodiment, a quantity of bits occupied by the first page table entry is greater than a quantity of bits occupied by the second page table entry. For example, for a 64-bit system, the second page table entry occupies 8 bytes, and the first page table entry occupies 16 bytes. In this way, it can be ensured that a size of each level of page table remains unchanged when the solution in this embodiment is applied to the four-level page table shown in FIG. 3. For another example, the second page table entry occupies x bytes, and the first page table entry occupies y bytes, provided that y is greater than x.

It should be understood that, before obtaining a page table entry, the MMU does not know a type of the page table entry to be obtained. In this implementation, a page table entry may be read at a granularity of a quantity of bytes occupied by the first page table entry. Specifically, the MMU reads the page table entry based on the quantity of bytes occupied by the first page table entry, and determines, based on type indication information in the obtained page table entry, whether the page table entry is the first page table entry or the second page table entry.

For example, for the four-level page table shown in FIG. 3, the MMU obtains a page table entry at a granularity of at least 16 bytes each time, and determines a 16-byte page table entry by using 8 most significant bits in original 9 bits as an index (index). Whether the 16-byte page table entry is a first page table entry is determined based on type indication information in the page table entry. If the 16-byte page table entry is the first page table entry, a first page table entry processing procedure is performed. If the 16-byte page table entry is not the first page table entry, the 16-byte page table entry actually includes two 8-byte second page table entries. The first page table entry includes type indication information, and the type indication information indicates that the first page table entry is a page table entry that is capable of indicating the first virtual address range.

In another possible implementation, there are a plurality of first physical memories. For example, the requirement of the first process for a physical memory is 1 GB+1 MB, and the size of the contiguous free physical memory in the memory includes a 1 MB contiguous space and a 1 GB contiguous space. Therefore, the first physical memory allocated by the processor core based on the size of the physical memory required by the first process and the size of the contiguous free physical memory in the memory includes a first physical memory #1 and a first physical memory #2.

In this implementation, a plurality of physical pages greater than 4 KB may be allocated to the first process. In this case, a plurality of different first page table entries may be created to record information about a plurality of different first physical memories.

For example, the first page table further includes a first page table entry #2 indicating a second virtual address range, the second virtual address range corresponds to a second virtual memory space, and a size of the second virtual memory space is equal to a size of the first physical memory #2. For example, if the first physical memory allocated to the first process includes the first physical memory #1 sized 1 GB and the first physical memory #2 sized 1 MB, the first virtual memory space corresponding to the first virtual address range indicated in a first page table entry #1 is 1 GB, and the second virtual memory space corresponding to the second virtual address range indicated in a first page table entry #2 is 1 MB. In this embodiment, there may be a plurality of page table entries that can implement a function of indicating a physical page greater than 4 KB, and the plurality of page table entries may be located in page tables at a same level or different levels.

Optionally, the first page table entry #1 and the first page table entry #2 may belong to a same level of page table. For example, the n^{th}-level page table includes the first page table entry #1 and the first page table entry #2, and the first physical memory #1 and the first physical memory #2 may be accessed by using the n^{th}-level page table when the physical memory is accessed.

Optionally, the first page table entry #1 and the first page table entry #2 may belong to page tables at different levels. For example, the n^{th}-level page table includes the first page table entry #1, and an (n+1)^{th}-level page table includes the first page table entry #2. When the physical memory is accessed, the first physical memory #1 may be accessed by using the n^{th}-level page table, and the first physical memory #2 may be accessed by using the (n+1)^{th}-level page table.

For example, the first page table entry further includes information indicating the second virtual address range, the second virtual address range corresponds to the second virtual memory space, and the size of the second virtual memory space is equal to the size of the first physical memory #2. For example, if the first physical memory allocated to the first process includes the first physical memory #1 sized 1 GB and the first physical memory #2 sized 1 MB, the first virtual memory space corresponding to the first virtual address range indicated in the first page table entry #1 is 1 GB, and the second virtual memory space corresponding to the indicated second virtual address range is 1 MB. In other words, in this embodiment of this application, the first page table entry may include information indicating a plurality of virtual address ranges, so that a plurality of different contiguous physical memories are mapped by using one page table entry. It should be understood that if one page table entry includes the information indicating the plurality of virtual address ranges, the page table entry may be expanded. For example, the first page table entry may be 32 bytes.

For ease of understanding, the following describes a possible form of the first page table in this embodiment with reference to a specific example.

Example 1: The first page table is a four-level page table, and the first page table includes a first page table entry #1, a first page table entry #2, and a first page table entry #3. The first page table entry #1 indicates a first virtual address range #1, the first page table entry #2 indicates a first virtual address range #2, and the first page table entry #3 indicates a first virtual address range #3.

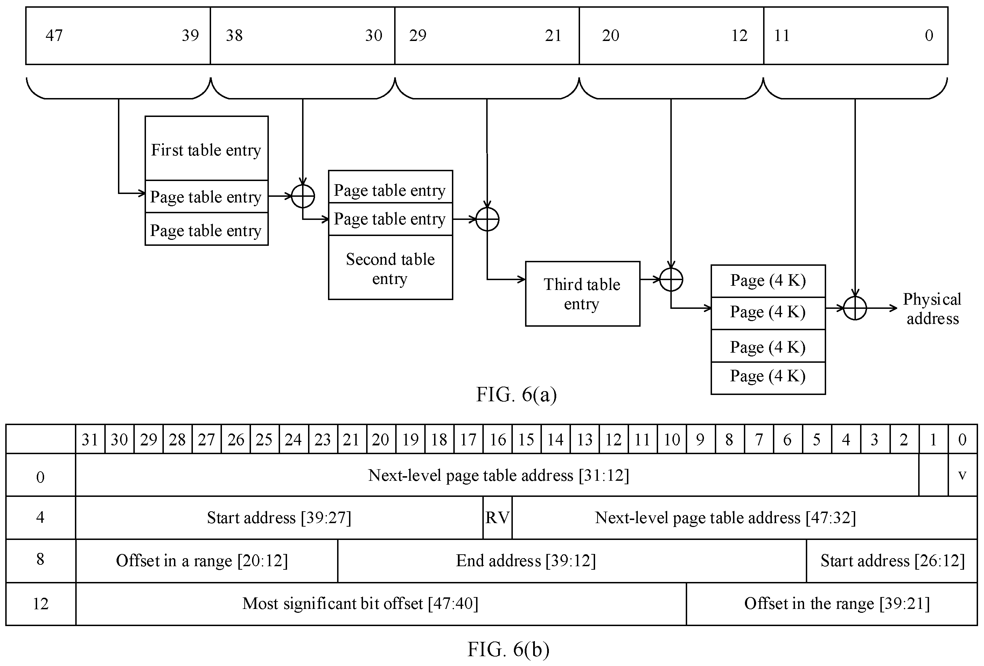

FIG. 6(a) is a diagram of a first page table according to an embodiment of this application. It can be seen from FIG. 6(a) that the first page table includes a first-level page table, a second-level page table, a third-level page table, and a fourth-level page table. Refer to FIG. 6(a). In the first-level page table, bits [47:39] indicate page table entry indexes in the first-level page table, bits [38:30] indicate page table entry indexes in the second-level page table, bits [29:21] indicate page table entry indexes in the third-level page table, bits [20:12] indicate page table entry indexes in the fourth-level page table, and bits [11:0] indicate a virtual page offset determined by using the four-level page table. The virtual page offset is used for an operation on an address that is in a page table entry and that directly points to a physical memory block, to obtain a physical address.

Specifically, in the first page table shown in FIG. 6(a), a plurality of page table entries of the first-level page table include a page table entry of a table type (for example, one or more page table entries in the plurality of page table entries of the first-level page table shown in FIG. 6(a)) that indicates a base address of the second-level page table (or provide an address pointer pointing to a next-level radix tree); a plurality of page table entries of the second-level page table include a page table entry of a table type (for example, one or more page table entries in the plurality of page table entries of the second-level page table shown in FIG. 6(a)) that indicates a base address of the third-level page table; and a plurality of page table entries of the third-level page table include a page table entry of a table type (a page table entry of the third-level page table shown in FIG. 6(a)) that indicates a base address of the fourth-level page table.

In addition, the first page table shown in FIG. 6(a) may simultaneously support different physical memory sizes. For example, if the plurality of page table entries of the first-level page table include a first page table entry #1 of a range type, and a physical memory size range supported by the first page table entry #1 is 0 TB to 1 TB, a first virtual address range #1 indicated by the first page table entry #1 may support physical memory mapping of 0 TB to 1 TB. The plurality of page table entries of the second-level page table include a first page table entry #2 of a range type, and a physical memory size range supported by the first page table entry #2 is 0 GB to 2 GB. In this case, a first virtual address range #2 indicated by the first page table entry #2 may support physical memory mapping of 0 GB to 2 GB. The plurality of page table entries of the third-level page table include a first page table entry #3 of a range type, and a physical memory size range supported by the first page table entry #3 is 0 MB to 4 MB. In this case, a first virtual address range #3 indicated by the first page table entry #3 may support physical memory mapping of 0 MB to 4 MB.

For example, a data structure of the first page table entry #1 in FIG. 6(a) is shown in FIG. 6(b). It can be seen from FIG. 6(b) that the first page table entry #1 includes the following information:
indication information of a first virtual address range, next-level page table address indication information, valid bit indication information (v), type indication information, page offset information, and most significant bit offset information.

In FIG. 6(b), 36 bits (for example, bits [31:12] and bits [47:32] shown in FIG. 6(b)) of a virtual address of a process corresponding to the first page table entry #1 form a field pointing to a next-level page table address; 28 bits (for example, bits [26:12] and bits [39:27] shown in FIG. 6(b)) form a field for describing a start address of the first virtual address range; 28 bits (for example, bits [39:12] shown in FIG. 6(b)) form a field for describing an end address of the first virtual address range; 28 bits (for example, bits [20:12] and bits [39:21] shown in FIG. 6(b)) form a field indicating the page offset information; 8 bits (for example, bits [47:40] shown in FIG. 6(b)) form a field indicating a most significant bit offset; and 1 bit (for example, a bit 0 shown in FIG. 6(b)) forms a field indicating whether the first page table entry is read into the memory.

For example, the first page table entry #1 may further include the type indication information (an RV bit shown in FIG. 6(b)), and the type indication information indicates whether the first page table entry #1 is a page table entry including the indication information indicating the first virtual address range #1.

If the virtual address #1 obtained by the MMU is in an address range described by the field for describing the start address of the first virtual address range and the field for describing an end address of the first virtual address range in the first page table entry #1, the MMU may translate the virtual address #1 to a physical address #1. Specifically, an expression of the physical address #1 is as follows: The physical address #1 [47:0]= {the field indicating the most significant bit offset information [47:40], the virtual address [39:12]+ the field indicating the page offset information [39:12], the virtual address [11:0]}.

A specific translation procedure is as follows: First, a PPN of a 1 TB physical page to which the physical address #1 corresponding to the virtual address #1 belongs is determined based on the field indicating the most significant bit offset information [47:40]. For example, it is determined, based on the field indicating the most significant bit offset information [47:40], that the physical address #1 belongs to an X^{th} 1 TB physical address space in a memory space.

Then, an offset of the physical address #1 in the physical page is determined based on the field indicating the page offset information [39:12]. For example, it is determined, based on the field indicating the page offset information [39:12], that the offset of the physical address #1 is 1 GB (which may be understood as that 0 GB to 1 GB in the physical page is occupied by another process). For example, when a virtual address space of the first process is 0 GB to 2 GB, and a virtual address space 0 GB to 1.5 GB is mapped to the X^{th} 1 TB physical address space, a start location of a physical address space corresponding to the virtual address space 0 GB to 1.5 GB in the X^{th} 1 TB physical address space is 1 GB. In this case, the physical address space corresponding to the virtual address space 0 GB to 1.5 GB is 1 GB to 2.5 GB.

Further, an actual location of the virtual address #1 in the virtual address space 0 GB to 1.5 GB is determined based on the virtual address [39:12]. For example, if a virtual address space indicated by bits 12 to 39 of the virtual address #1 is 1 GB, it may be determined that the physical address #1 is a physical address corresponding to 2 GB (that is, 1 GB+1 GB) in the X^{th} 1 TB physical address space. A definition of the virtual address [11:0] is consistent with that in the conventional technology. Details are not described again.

A base address of a physical page to which the physical address #1 belongs is determined based on the field indicating the most significant bit offset information in the first page table entry #1 and the bits 12 to 39 of the virtual address #1.

If the virtual address #1 is not in the address range described in the field for describing the start address of the first virtual address range and the field for describing an end address of the first virtual address range in the first page table entry #1, it indicates that the first page table entry #1 is a miss, and the field pointing to the next-level page table address is used to continue a next-level page table walk.

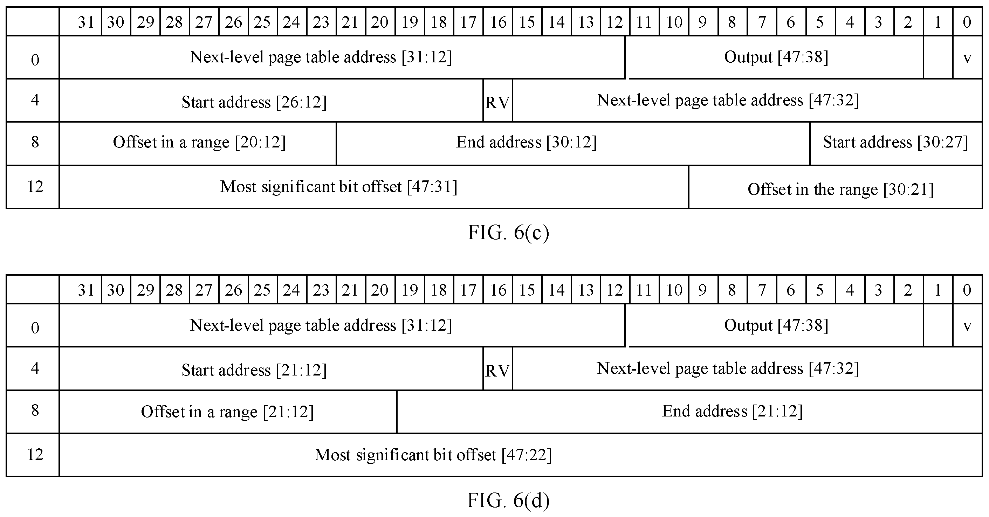

A data structure of the first page table entry #2 in FIG. 6(a) is shown in FIG. 6(c). It can be seen from FIG. 6(c) that the first page table entry #2 includes the following information:
indication information of the second virtual address range, next-level page table address indication information, valid bit indication information, type indication information, page offset information, and most significant bit offset information.

In FIG. 6(c), 36 bits (for example, bits [31:12] and bits [47:32] shown in FIG. 6(c)) of a virtual address of a process corresponding to the first page table entry #2 form a field pointing to a next-level page table address; 19 bits (for example, bits [26:12] and bits [30:27] shown in FIG. 6(c)) form a field for describing a start address of the second virtual address range; 19 bits (for example, bits [30:12] shown in FIG. 6(c)) form a field for describing an end address of the second virtual address range; 19 bits (for example, bits [20:12] and bits [30:21] shown in FIG. 6(c)) form a field indicating an offset in the second virtual address range; 17 bits (for example, bits [47:38] and bits [37:31] shown in FIG. 6(c)) form a field indicating a most significant bit offset of a second physical address range to which the second virtual address range is mapped; and 1 bit (for example, a bit 0 shown in FIG. 6(c)) forms a field indicating whether a second page table entry is read into the memory.

For example, the first page table entry #2 may further include the type indication information (for example, an RV bit shown in FIG. 6(c)), and the type indication information indicates whether the first page table entry #2 is a page table entry including the indication information indicating the second virtual address range #2.

If the virtual address #1 obtained by the MMU is in an address range described by the field for describing the start address of the second virtual address range and the field for describing an end address of the second virtual address range in the first page table entry #2, the MMU may translate the virtual address #1 to a physical address #1. The physical address #1 [47:0]={the field indicating the most significant bit offset of the second physical address range to which the second virtual address range is mapped [47:31], the virtual address [30:12]+the field indicating the offset in the second virtual address range [30:12], a virtual address [11:0]}.

A specific translation procedure is as follows: First, a PPN of a 2 GB physical page to which the physical address #1 corresponding to the virtual address #1 belongs is determined based on the field indicating the most significant bit offset of the second physical address range to which the second virtual address range is mapped [47:31]. For example, it is determined, based on the field indicating the most significant bit offset of the second physical address range to which the second virtual address range is mapped [47:31], that the physical address #1 belongs to an X^{th} 2 GB physical address space in a memory space.

Then, an offset of the physical address #1 in the physical page is determined based on the field indicating the offset in the second virtual address range [30:12]. For example, it is determined, based on the field indicating the offset in the second virtual address range [30:12], that the offset of the physical address #1 is 0.5 GB (which may be understood as that 0 GB to 0.5 GB in the physical page is occupied by another process). For example, when the virtual address space of the first process is 0 GB to 2 GB, and a virtual address space 0 GB to 1.5 GB is mapped to the X^{th} 2 GB physical address space, a start location of a physical address space corresponding to the virtual address space 0 GB to 1.5 GB in the X^{th} 2 GB physical address space is 0.5 GB. In this case, the physical address space corresponding to the virtual address space 0 GB to 1.5 GB is 0.5 GB to 2 GB.

Further, an actual location of the virtual address #1 in the virtual address space 0 GB to 1.5 GB is determined based on the virtual address [30:12]. For example, if a virtual address indicated by bits 12 to 30 of the virtual address #1 is 1 GB, it may be determined that the physical address #1 is a physical address corresponding to 1.5 GB (that is, 1 GB+0.5 GB) in the X^{th} 2 GB physical address space.

If the virtual address #1 is not in the address range described in the field for describing the start address of the second virtual address range and the field for describing an end address of the second virtual address range in the first page table entry #2, it indicates that the first page table entry #2 is a miss, and the field pointing to the next-level page table address is used to continue a next-level page table walk.

A data structure of the first page table entry #3 in FIG. 6(a) is shown in FIG. 6(d). It can be seen from FIG. 6(d) that the first page table entry #3 includes the following information:
indication information of the third virtual address range, next-level page table address indication information, valid bit indication information, type indication information, offset information in the third virtual address range, and most significant bit offset information.

The indication information of the third virtual address range includes start address indication information of the third virtual address range and end address indication information of the third virtual address range. The offset information in the third virtual address range indicates an offset of a range to which the third virtual address range is mapped, and the most significant bit offset information indicates a most significant bit offset of a third physical address range to which the third virtual address range is mapped.

In FIG. 6(d), 36 bits (for example, bits [31:12] and bits [47:32] shown in FIG. 6(d)) of a virtual address of a process corresponding to the first page table entry #3 form a field pointing to a next-level page table address; 10 bits (for example, bits [21:12] shown in FIG. 6(d)) form a field for describing a start address of the third virtual address range; 10 bits (for example, bits [21:12] shown in FIG. 6(d)) form a field for describing an end address of the third virtual address range; 10 bits (for example, bits [21:12] shown in FIG. 6(d)) form a field indicating an offset in the third virtual address range; 26 bits (for example, bits [47:38] and bits [37:22] shown in FIG. 6(d)) form a field indicating the most significant bit offset of the third physical address range to which the third virtual address range is mapped; and 1 bit (for example, a bit 0 shown in FIG. 6(d)) forms a field indicating whether a third page table entry is read into the memory.

For example, the first page table entry #3 may further include the type indication information (an RV bit shown in FIG. 6(d)), and the type indication information indicates whether the first page table entry #3 is a page table entry including the indication information indicating the third virtual address range #3.

If the virtual address #1 obtained by the MMU is in an address range described by the field for describing the start address of the third virtual address range and the field for describing an end address of the third virtual address range in the first page table entry #3, the MMU may translate the virtual address #1 to a physical address #1. The physical address #1 [47:0]={the field indicating the most significant bit offset of the third physical address range to which the third virtual address range is mapped [47:22], the virtual address [21:12]+the field indicating the offset in the third virtual address range [21:12], a virtual address [11:0]}.

A specific translation procedure is as follows: First, a PPN of a 4 MB physical page to which the physical address #1 corresponding to the virtual address #1 belongs is determined based on the field indicating the most significant bit offset of the third physical address range to which the third virtual address range is mapped [47:22]. For example, it is determined, based on the field indicating the most significant bit offset of the third physical address range to which the third virtual address range is mapped [47:22], that the physical address #1 belongs to an X^{th} 4 MB physical address space in a memory space.

Then, an offset of the physical address #1 in the physical page is determined based on the field indicating the offset in the third virtual address range [21:12]. For example, it is determined, based on the field indicating the offset in the third virtual address range [21:12], that the offset of the physical address #1 is 0.5 MB (which may be understood as that 0 MB to 0.5 MB in the physical page is occupied by another process). For example, when the virtual address space of the first process is 0 GB to 2 GB, and a virtual address space 0 MB to 3 MB is mapped to the X^{th} 4 MB physical address space, a start location of a physical address space corresponding to the virtual address space 0 MB to 3 MB in the X^{th} 4 MB physical address space is 0.5 MB. In this case, the physical address space corresponding to the virtual address space 0 MB to 3 MB is 0.5 MB to 3.5 MB.

Further, an actual location of the virtual address #1 in the virtual address space 0 MB to 3 MB is determined based on the virtual address [21:12]. For example, if a virtual address indicated by bits 12 to 30 of the virtual address #1 is 1 MB, it may be determined that the physical address #1 is a physical address corresponding to 1.5 MB (that is, 1 MB+0.5 MB) in the X^{th} 4 MB physical address space.

If the virtual address #1 is not in the address range described in the field for describing the start address of the third virtual address range and the field for describing an end address of the third virtual address range in the first page table entry #3, it indicates that the first page table entry #3 is a miss, and the field pointing to the next-level page table address is used to continue a next-level page table walk.

It should be understood that FIG. 6(b) to FIG. 6(d) are merely examples for describing possible forms of the page table entries in this embodiment, and do not constitute any limitation on the protection scope of this application. The information included in the page table entry may alternatively be located at another location in the page table entry. Examples are not enumerated herein.

It can be learned from the foregoing that, theoretically, for the first process that requires a 1 M physical memory, the computer system may flexibly allocate one or more appropriate physical pages to the first process based on the requirement of the first process for a physical memory. However, according to the page table management mechanism shown in FIG. 3, the computer system directly allocates 256 physical pages of 4 K to the first process, because the requirement of the first process does not meet a granularity of 2 M or 1 G.

For example, if the 256 physical pages of 4K are directly allocated to the first process, the processor core may allocate the first page table shown in FIG. 3 to the first process. The first page table is a four-level page table, and the fourth-level page table supports a 4K normal page. Therefore, in a procedure in which the MMU executes the first process to perform address translation, the MMU needs to walk through to the last-level page table of the four-level page table shown in FIG. 3 to complete translation from a virtual address to a physical address. In addition, page table entries corresponding to the 256 page tables supporting the normal page and page table entries of a plurality of previous-level page tables (for example, a first-level page table, a second-level page table, and a third-level page table) corresponding to each of the 256 page tables need to be created, as shown in (a) in FIG. 7.

If a computer flexibly allocates one or more appropriate physical pages to the first process based on the requirement of the first process for a physical memory and a current memory space status, for example, if a current memory has a 512 K contiguous space and several discrete 4 K spaces, the computer system allocates 128 physical pages of 4 K and one physical page including a 512 K physical memory to the first process, to meet the requirement of the first process for a physical memory.

For example, if the 128 physical pages of 4 K and the one physical page including the 512 K physical memory are allocated to the first process, the first page table allocated by the processor core to the first process includes a sub-page table supporting the 512 K physical page, and includes a sub-page table supporting a 4K normal page. For example, the processor core may allocate a four-level page table to the first process, and a one-level sub-page table (for example, a first-level page table, a second-level page table, or a third-level page table) in the four-level page table supports an index of the 512 K physical page, and a fourth-level page table supports the 4K normal page. Therefore, in the procedure in which the MMU executes the first process to perform address translation, for a page table supporting the 512 K physical page, translation from the virtual address to the physical address can be completed without walking through to the last-level page table of the four-level page table shown in FIG. 3 (for example, translation from the virtual address to the physical address can be completed by walking the first-level page table). For a page table supporting the 4K normal page, translation from the virtual address to the physical address is completed by walking through to the last-level page table in the four-level page table shown in FIG. 3, as shown in (b) in FIG. 7.

By comparing a page table mechanism shown in (a) in FIG. 7 with a page table mechanism shown in (b) in FIG. 7, it can be learned that the page table mechanism shown in (b) in FIG. 7 can save a one-level page table walk, and save a space of 126 page table entries. In addition, both address translation efficiency and page table memory overheads are better than those of a conventional solution.

In conclusion, embodiments of this application provide the method for accessing a memory. In the method, a physical page is allocated to the process based on the size of the contiguous free physical memory in the memory and the requirement of the first process for a physical memory. This resolves a gap between a small page and a large page, so that the system can better manage a page table based on the actual memory distribution.

It should be understood that the specific examples shown in FIG. 4 to FIG. 7 in embodiments of this application are merely intended to help a person skilled in the art better understand embodiments of this application, but are not intended to limit the scope of embodiments of this application. It should be further understood that sequence numbers of the foregoing procedures do not mean a sequence of performing the procedures. The sequence of performing the procedures should be determined based on functions and internal logic of the procedures, and should not be construed as any limitation on the implementation procedures of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. For example, a management mechanism of a current page table is to combine an address and a permission for management, and store the address and the permission in a same page table. However, in some application scenarios, a host may open a same address space to a plurality of users, but permissions of the users are not exactly the same. In the mechanism of the current page table, the page table can only be copied for a plurality of times to meet a requirement of this scenario. With consideration from another perspective, if address translation and permission verification are managed separately, the plurality of users share one address table but exclusively occupy one permission table. This can better adapt to this scenario. In the background in which the permission and the address are separately designed, this application can play a great role in a permission table design. Permission management is more centralized than address management, and therefore a representation form of a range table is more suitable for permission management of a large segment of VA space.

The foregoing mainly describes the solutions provided in embodiments of this application from the perspective of the methods. To implement the foregoing functions, corresponding hardware structures and/or software modules for performing the functions are included. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

The following describes in detail an apparatus for accessing a memory provided in embodiments of this application with reference to FIG. 8 to FIG. 10. It should be understood that descriptions of apparatus embodiments correspond to the descriptions of the method embodiments. Therefore, for content that is not described in detail, refer to the foregoing method embodiments. For brevity, details of a part of content are not described herein again.

In embodiments of this application, functional modules of a transmit device or a receive device may be divided based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely logical function division. In actual implementation, another division manner may be used. An example in which each functional module is obtained through division based on each corresponding function is used below for description.

FIG. 8 is a diagram of a structure of an apparatus 800 for accessing a memory according to an embodiment of this application. The apparatus 800 for accessing a memory may be applied to a processor core in which a first process runs. The apparatus 800 for accessing a memory may be configured to perform the foregoing method for accessing a memory, for example, configured to perform the method shown in FIG. 4. The apparatus 800 for accessing a memory may include an allocation unit 810 and a creation unit 820.

The allocation unit 810 is configured to allocate a first physical memory. The creation unit 820 is configured to create an n^{th}-level page table in a first page table for the first process based on the first physical memory. The first page table is used to implement translation from a virtual address of the first process to a physical address when the first process accesses the memory. The first page table is an m-level page table, m is a positive integer, and n is a positive integer less than or equal to m. The n^{th}-level page table includes a first page table entry, and the first page table entry includes information indicating a first virtual address range. The first virtual address range corresponds to a first virtual memory space, and a size of the first virtual memory space is equal to a size of the first physical memory.

For example, with reference to FIG. 4, the allocation unit 810 may be configured to perform S410, and the creation unit 820 may be configured to perform S420.

It should be noted that the apparatus in FIG. 8 may also be configured to perform method steps in variations of embodiments shown in the foregoing accompanying drawings. Details are not described herein again.

An embodiment of this application further provides a chip system 900. As shown in FIG. 9, the chip system 900 includes at least one processor and at least one interface circuit. For example, when the chip system 900 includes one processor and one interface circuit, the processor may be a processor 910 shown in a solid line box (or a processor 910 shown in a dashed line box) in FIG. 9, and the interface circuit may be an interface circuit 920 shown in a solid line box (or an interface circuit 920 shown in a dashed line box) in FIG. 9.

When the chip system 900 includes two processors and two interface circuits, the two processors include a processor 910 shown in a solid line box and a processor 910 shown in a dashed line box in FIG. 9, and the two interface circuits include an interface circuit 920 shown in a solid line box and an interface circuit 920 shown in a dashed line box in FIG. 9. This is not limited. The processor 910 and the interface circuit 920 may be interconnected through a line. For example, the interface circuit 920 may be configured to receive a signal (for example, instructions stored in a memory). For another example, the interface circuit 920 may be configured to send a signal to another apparatus (for example, the processor 910).

For example, the interface circuit 920 may read the instructions stored in the memory, and send the instructions to the processor 910. When the instructions are executed by the processor 910, the apparatus for accessing a memory or a memory access apparatus may be caused to perform the steps in the foregoing embodiments. Certainly, the chip system 900 may further include another discrete device. This is not specifically limited in embodiments of this application.

Another embodiment of this application further provides a computer-readable storage medium. The computer-readable storage medium stores instructions. When the instructions are run on an apparatus for accessing a memory, the apparatus for accessing a memory performs the steps performed by the apparatus for accessing a memory in the method procedure shown in the foregoing method embodiments. In some embodiments, the disclosed methods may be implemented as computer program instructions encoded in a machine-readable format on a computer-readable storage medium or encoded on another non-transitory medium or product.

FIG. 10 schematically shows a conceptual partial view of a computer program product according to an embodiment of this application. The computer program product includes a computer program used to execute a computer process on a computing device.

In an embodiment, the computer program product is provided through a signal-carrying medium 1000. The signal-carrying medium 1000 may include one or more program instructions that, when run by one or more processors, may provide the functions or a part of the functions described above with respect to FIG. 4. Thus, for example, refer to FIG. 4. One or more features in S410 and S420 may be undertaken by one or more instructions associated with the signal-carrying medium 1000. In addition, the program instructions in FIG. 10 are also described as example instructions.

In some examples, the signal-carrying medium 1000 may include a computer-readable medium 1001, for example but not limited to, a hard disk drive, a compact disk (CD), a digital video disc (DVD), a digital tape, a memory, a read-only memory (read-only memory, ROM), or a random access memory (random access memory, RAM).

In some implementations, the signal-carrying medium 1000 may include a computer-recordable medium 1002, for example but not limited to a memory, a read/write (R/W) CD, or an R/W DVD.

In some implementations, the signal-carrying medium 1000 may include a communication medium 1003, for example but not limited to, a digital and/or analog communication medium (for example, an optical fiber, a waveguide, a wired communication link, or a wireless communication link). The signal-carrying medium 1000 may be conveyed by a wireless communication medium 1003 (for example, a wireless communication medium that complies with the IEEE 1502.11 standard or another transmission protocol). The one or more program instructions may be, for example, computer-executable instructions or logic implementation instructions.

In some examples, the apparatus for accessing a memory, such as described with respect to FIG. 4, may be configured to provide various operations, functions, or actions in response to one or more program instructions through the computer-readable medium 1001, the computer-recordable medium 1002, and/or the communication medium 1003.

It should be understood that the arrangement described herein is merely used as an example. Therefore, a person skilled in the art will understand that other arrangements and other elements (for example, machines, interfaces, functions, sequences, and function groups) can be used instead, and some elements may be omitted together based on a desired result. In addition, many of the described elements are functional entities that can be implemented as discrete or distributed components, or implemented in any appropriate combination at any appropriate location in combination with another component.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer-executable instructions are executed on a computer, the procedures or functions according to embodiments of this application are all or partially generated. The computer may be a general-purpose computer, a special-purpose computer, a computer network, or another programmable apparatus.

The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for accessing a memory, applied to a processor core in which a first process runs, wherein the method comprises:
creating a first page table for the first process, wherein the first page table is used to implement translation from a virtual address of the first process to a physical address when the first process accesses the memory, the first page table is an m-level page table, and m is a positive integer, wherein
a first page table entry in the first page table comprises information indicating a first virtual address range, and the first virtual address range corresponds to a first virtual memory space.

2. The method according to claim 1, wherein the method further comprises: storing the first page table.

3. A method for accessing a memory, applied to a memory management unit, wherein the method comprises:
receiving an access request for a memory, wherein the access request comprises a first virtual address of a first process; and
reading, based on configuration information and the first virtual address, a page table entry from a first page table corresponding to the first process, wherein the configuration information indicates that at least one page table entry in the first page table has a function of indicating a virtual address range, wherein
a first page table entry in the first page table comprises information indicating a first virtual address range, and the first virtual address range corresponds to a first virtual memory space.

4. The method according to claim 3, wherein reading, based on the configuration information and the first virtual address, the page table entry from the first page table corresponding to the first process comprises:
reading, at a granularity of a quantity of bytes occupied by the first page table entry, the page table entry from the first page table corresponding to the first process.

5. The method according to claim 3 or 4, wherein the method further comprises:
determining that the first virtual address belongs to the first virtual address range; and
determining, based on page offset information and most significant bit offset information that are comprised in the first page table entry, a first physical address corresponding to the first virtual address, wherein
the page offset information indicates an offset between a physical start address of a first physical memory and a start physical address of a first physical page, and the most significant bit offset information indicates the start physical address of the first physical page; and
the first physical page is a physical page comprising the first physical memory, and a memory size of the first physical page is a physical memory size indicated by the first page table entry.

6. The method according to any one of claims 1 to 5, wherein a size of the first virtual memory space is equal to a size of the first physical memory allocated to the first process.

7. The method according to claim 6, wherein the size of the first physical memory is determined based on a size of a contiguous free physical memory and a requirement of the first process for a physical memory.

8. The method according to any one of claims 1 to 7, wherein the information indicating the first virtual address range comprises:
first indication information and second indication information, wherein the first indication information indicates a start address of the first virtual address range, and the second indication information indicates an end address of the first virtual address range;
the first indication information and third indication information, wherein the third indication information indicates a span of the first virtual address range; or
the second indication information and the third indication information.

9. The method according to any one of claims 1 to 8, wherein when the first page table comprises an n^{th}-level page table and an (n+1)^{th} level page table, and when the first page table entry is a page table entry in the n^{th}-level page table,
the first page table entry further comprises information indicating a base address of the (n+1)^{th}-level page table, wherein n is a positive integer less than m.

10. The method according to any one of claims 1 to 9, wherein the first page table entry further comprises type indication information, and the type indication information indicates that the first page table entry is a page table entry that is capable of indicating a virtual address range.

11. The method according to any one of claims 1 to 10, wherein when the first physical memory is less than the requirement of the first process for a physical memory,
the first page table entry further comprises information indicating a second virtual address range, wherein the second virtual address range corresponds to a second virtual memory space, and a size of the second virtual memory space is equal to a size of a second physical memory allocated to the first process; or
the first page table further comprises a second page table entry, wherein the second page table entry is used to determine the second physical memory allocated to the first process.

12. The method according to claim 11, wherein when the second page table entry does not have the function of indicating the virtual address range, the quantity of bytes occupied by the first page table entry is an integer multiple of a quantity of bytes occupied by the second page table entry.

13. An apparatus for accessing a memory, comprising:
a processing module, configured to create a first page table for the first process, wherein the first page table is used to implement translation from a virtual address of the first process to a physical address when the first process accesses the memory, the first page table is an m-level page table, and m is a positive integer, wherein
a first page table entry in the first page table comprises information indicating a first virtual address range, and the first virtual address range corresponds to a first virtual memory space.

14. The apparatus according to claim 13, further comprising a storage unit, configured to store the first page table.

15. An apparatus for accessing a memory, comprising:
a receiving module, configured to receive an access request for a memory, wherein the access request comprises a first virtual address of a first process; and
a processing module, configured to read, based on configuration information and the first virtual address, a page table entry from a first page table corresponding to the first process, wherein the configuration information indicates that at least one page table entry in the first page table has a function of indicating a virtual address range, wherein
a first page table entry in the first page table comprises information indicating a first virtual address range, and the first virtual address range corresponds to a first virtual memory space.

16. The apparatus according to claim 15, wherein that the processing module reads, based on the configuration information and the first virtual address, the page table entry from the first page table corresponding to the first process comprises:
reading, by the processing module at a granularity of a quantity of bytes occupied by the first page table entry, the page table entry from the first page table.

17. The apparatus according to claim 15 or 16, wherein the processing module is further configured to:
determine that the first virtual address belongs to the first virtual address range; and
determine, based on page offset information and most significant bit offset information that are comprised in the first page table entry, a first physical address corresponding to the first virtual address, wherein
the page offset information indicates an offset between a physical start address of the first physical memory and a start physical address of a first physical page, and the most significant bit offset information indicates the start physical address of the first physical page; and
the first physical page is a physical page comprising the first physical memory, and a memory size of the first physical page is a physical memory size indicated by the first page table entry.

18. The apparatus according to any one of claims 13 to 17, wherein a size of the first virtual memory space is equal to a size of the first physical memory allocated to the first process.

19. The apparatus according to claim 18, wherein the size of the first physical memory is determined based on a size of a contiguous free physical memory and a requirement of the first process for a physical memory.

20. The apparatus according to any one of claims 13 to 19, wherein the information indicating the first virtual address range comprises:
first indication information and second indication information, wherein the first indication information indicates a start address of the first virtual address range, and the second indication information indicates an end address of the first virtual address range;
the first indication information and third indication information, wherein the third indication information indicates a span of the first virtual address range; or
the second indication information and the third indication information.

21. The apparatus according to any one of claims 13 to 20, wherein when the first page table comprises an n^{th}-level page table and a next-level page table of the n^{th}-level page table, and when the first page table entry is a page table entry in the n^{th}-level page table,
the first page table entry further comprises information indicating a base address of the (n+1)^{th}-level page table, wherein n is a positive integer less than m.

22. The apparatus according to any one of claims 13 to 21, wherein the first page table entry further comprises type indication information, and the type indication information indicates that the first page table entry is a page table entry that is capable of indicating a virtual address range.

23. The apparatus according to any one of claims 13 to 22, wherein when the first physical memory is less than the requirement of the first process for a physical memory, the first page table entry further comprises information indicating a second virtual address range, wherein the second virtual address range corresponds to a second virtual memory space, and a size of the second virtual memory space is equal to a size of a second physical memory allocated to the first process; or
the first page table further comprises a second page table entry, wherein the second page table entry is used to determine the second physical memory allocated to the first process.

24. The apparatus according to claim 22, wherein when the second page table entry does not have the function of indicating the virtual address range, the quantity of bytes occupied by the first page table entry is an integer multiple of a quantity of bytes occupied by the second page table entry.

25. An apparatus for accessing a memory, comprising a processor, configured to read instructions stored in a memory, wherein when the processor executes the instructions, the apparatus for accessing a memory is caused to implement the method according to any one of claims 1 to 12.

26. A chip, comprising:
at least one processor core, configured to perform the method according to any one of claims 1, 2, or 6 to 12; and
at least one memory management unit, configured to perform the method according to any one of claims 3 to 12.

27. A computer device, comprising the chip according to claim 26.

28. A computer program product, wherein the computer program product comprises computer program code, and when the computer program code is run on a computer, the method according to any one of claims 1 to 12 is performed.

29. A computer-readable storage medium, comprising a computer program, wherein when the computer program is run on a computer device, a processing module in the computer device is caused to perform the method according to any one of claims 1 to 12.
